# EUROPEAN PATENT APPLICATION

(11) **EP 2 522 534 A1**
(43) Date of publication of application: **14.11.2012**
(21) Application number: 10851407.6
(22) Date of filing: 14.05.2010
(51) Int. Cl.: B60H 1/22, B60H 1/08, B60L 11/18

(54) **TEMPERATURE MANAGEMENT SYSTEM FOR VEHICLES**

(71) Applicant: Toyota Jidosha Kabushiki Kaisha, Toyota-shi, Aichi 471-8571 (JP)
(72) Inventor: ASAI, Takashi, Toyota-shi, Aichi 471-8571 (JP); MORITA, Masaki, Toyota-shi, Aichi 471-8571 (JP)
(74) Representative: Intès, Didier Gérard André
(86) International application number: PCT/JP2010/058161
(87) International publication number: WO 2011/142024

(57) **Abstract**

A temperature control system includes a first air conditioner. (510) for changing a temperature of a heat medium, a second air conditioner (520) for adjusting a temperature of air in a vehicle interior (140) using the heat medium, a first supply member (610) for supplying the heat medium from the first air conditioner (510) to at least one of a battery stack (110) and the second air conditioner. (520), a second supply member (620) for supplying the heat medium from the battery stack (110) to the second air conditioner (520), a third supply member (630) for supplying the heat medium from the second air conditioner (520) to the electric equipment (100, 200, 210, 240), and a fourth supply member (640) for supplying the heat medium from the electric equipment (100, 200, 210, 240) to the first air conditioner (510).

## Description

### TECHNICAL FIELD

The present invention relates to a temperature control system of a vehicle, and more particularly to a temperature control system of a vehicle equipped with a power storage device for storing electric power, and electric equipment electrically connected to the power storage device.

### BACKGROUND ART

An electric vehicle using an electric motor as a driving source is known. An electric vehicle is also equipped with an air conditioner for keeping an appropriate temperature in a vehicle interior. An electric vehicle is not equipped with an internal combustion engine, and thus needs to use electric power stored in a power storage device such as a battery and a capacitor in order to activate the air conditioner. Consumption of electric power stored in the power storage device, however, reduces electric power that can be used for travel of the vehicle.

For this reason, as described in Japanese Patent Laying-Open No. 2001-63347 (PTL 1), it is proposed to activate an air conditioner with electric power supplied from a power supply outside a vehicle, during charging of a secondary battery from the external power supply.

### CITATION LIST

### PATENT LITERATURE

PTL 1: Japanese Patent Laying-Open No. 2001-63347

### SUMMARY OF INVENTION

### TECHNICAL PROBLEM

In an electric vehicle, the temperatures of a power storage device and the like need to be controlled as well. If the vehicle is equipped with a system for controlling the temperature in a vehicle interior and a separate system for controlling the temperature of the power storage device, however, the number of components may be increased. For example, a heat exchanger is required for each system, which may increase cost.

The present invention was made in view of the above problem. An object of the present invention is to control temperatures collectively.

### SOLUTION TO PROBLEM

A vehicle is equipped with a power storage device that stores electric power, and electric equipment electrically connected to the power storage device. A temperature control system of the vehicle includes a first air conditioner that changes a temperature of a medium, a second air conditioner that adjusts a temperature of air in a vehicle interior using the medium, a first supply member that supplies the medium from the first air conditioner to at least one of the power storage device and the second air conditioner, a second supply member that supplies the medium from the power storage device to the second air conditioner, a third supply member that supplies the medium from the second air conditioner to the electric equipment, and a fourth supply member that supplies the medium from the electric equipment to the first air conditioner.

According to this structure, the medium circulates successively through the first air conditioner, the power storage device, the second air conditioner and the electric equipment. Accordingly, the temperature of the air in the vehicle interior, the temperature of the power storage device, and the temperature of the electric equipment electrically connected to the power storage device can be controlled collectively. In addition, the medium is supplied from the power storage device to the second air conditioner. Thus, cold heat or heat can be stored in the power storage device, and the stored cold heat or heat can be utilized to cool or heat the air in the vehicle interior. Accordingly, electric power consumed by the first air conditioner for cooling or heating the medium can be reduced during travel, for example. Moreover, since the medium is supplied from the second air conditioner to the electric equipment, the medium that has dissipated heat in the second air conditioner for heating can be heated again by the heat generated by the electric equipment. Therefore, energy efficiency during heating of the medium can be improved.

In another embodiment, while electric power is supplied from a power supply outside the vehicle to the vehicle, the power storage device is charged with the electric power supplied from the power supply outside the vehicle. While the electric power is supplied from the power supply outside the vehicle to the vehicle, the first air conditioner operates with the electric power supplied from the power supply outside the vehicle, to cool the medium. While the electric power is supplied from the power supply outside the vehicle to the vehicle, the first supply member supplies the medium from the first air conditioner to the power storage device. During travel of the vehicle, the second air conditioner cools the air in the vehicle interior using the medium supplied from the power storage device.

According to this structure, while the electric power is supplied from the power supply outside the vehicle to the vehicle, the air in the vehicle interior is cooled, and the power storage device is also cooled. Consequently, cold heat is stored in the power storage device. Subsequently, during travel of the vehicle, the air in the vehicle interior is cooled with the power storage device serving as a heat storage device.

In yet another embodiment, while electric power is supplied from a power supply outside the vehicle to the vehicle, the power storage device is charged with the electric power supplied from the power supply outside the vehicle. While the electric power is supplied from the power supply outside the vehicle to the vehicle, the first air conditioner operates with the electric power supplied from the power supply outside the vehicle, to heat the medium. While the electric power is supplied from the power supply outside the vehicle to the vehicle, the first supply member supplies the medium from the first air conditioner to the power storage device. During travel of the vehicle, the second air conditioner heats the air in the vehicle interior using the medium supplied from the power storage device.

According to this structure, while the electric power is supplied from the power supply outside the vehicle to the vehicle, the air in the vehicle interior is heated, and the power storage device is also heated. Consequently, heat is stored in the power storage device. Subsequently, during travel of the vehicle, the air in the vehicle interior is heated with the power storage device serving as a heat storage device.

In yet another embodiment, while electric power is supplied from a power supply outside the vehicle to the vehicle, the power storage device is charged with the electric power supplied from the power supply outside the vehicle. While the electric power is supplied from the power supply outside the vehicle to the vehicle, the first air conditioner operates with the electric power supplied from the power supply outside the vehicle, to cool the medium. While the electric power is supplied from the power supply outside the vehicle to the vehicle, the first supply member supplies the medium from the first air conditioner to the power storage device. During travel of the vehicle, the first supply member supplies the medium from the first air conditioner to the second air conditioner.

According to this structure, while the electric power is supplied from the power supply outside the vehicle to the vehicle, the air in the vehicle interior is cooled, and the power storage device is also cooled. Subsequently, during travel of the vehicle, the medium is supplied from the first air conditioner to the second air conditioner. Accordingly, during travel of the vehicle, the second air conditioner cools the air in the vehicle interior using both the medium supplied from the power storage device and the medium supplied from the first air conditioner.

In yet another embodiment, the vehicle is equipped with a transaxle. While the electric power is supplied from the power supply outside the vehicle to the vehicle, the first supply member supplies the medium, while bypassing the transaxle, from the first air conditioner to the power storage device. During travel of the vehicle, the first supply member supplies the medium, through the transaxle, from the first air conditioner to the second air conditioner.

According to this structure, during travel of the vehicle, the cooled medium passes through the transaxle. Consequently, the transaxle can be cooled in a situation where the transaxle may generate heat. Accordingly, the temperature of the air in the vehicle interior, the temperature of the power storage device, and the temperature of the electric equipment electrically connected to the power storage device, as well as the temperature of the transaxle can be controlled collectively.

In yet another embodiment, while electric power is supplied from a power supply outside the vehicle to the vehicle, the power storage device is charged with the electric power supplied from the power supply outside the vehicle. While the electric power is supplied from the power supply outside the vehicle to the vehicle, the first air conditioner operates with the electric power supplied from the power supply outside the vehicle, to heat the medium. While the electric power is supplied from the power supply outside the vehicle to the vehicle, the first supply member supplies the medium from the first air conditioner to the power storage device. During travel of the vehicle, the first supply member supplies the medium from the first air conditioner to the second air conditioner.

According to this structure, while the electric power is supplied from the power supply outside the vehicle to the vehicle, the air in the vehicle interior is heated, and the power storage device is also heated. Subsequently, during travel of the vehicle, the medium is supplied from the first air conditioner to the second air conditioner. Accordingly, during travel of the vehicle, the second air conditioner can heat the air in the vehicle interior using both the medium supplied from the power storage device and the medium supplied from the first air conditioner.

In yet another embodiment, the vehicle is equipped with a transaxle. While the electric power is supplied from the power supply outside the vehicle to the vehicle, the first supply member supplies the medium, through the transaxle, from the first air conditioner to the power storage device. During travel of the vehicle, the first supply member supplies the medium, while bypassing the transaxle, from the first air conditioner to the second air conditioner.

According to this structure, while the electric power is supplied from the power supply outside the vehicle to the vehicle, the heated medium passes through the transaxle. Consequently, the transaxle is warmed up before the vehicle is started. Accordingly, the temperature of the air in the vehicle interior, the temperature of the power storage device, and the temperature of the electric equipment electrically connected to the power storage device, as well as the temperature of the transaxle can be controlled collectively.

In another embodiment, the first air conditioner includes a Peltier device, and a heat storage tank for storing the medium.

According to this structure, the temperature of the medium cooled or heated by the Peltier device is maintained by the heat storage tank.

In another embodiment, during travel of the vehicle, the Peltier device operates with electric power stored in the power storage device after a temperature of the medium in the heat storage tank changed to a predetermined temperature.

According to this structure, after the cold heat or heat stored in the heat storage tank is consumed, the electric power stored in the power storage device is used for temperature control. That is, before the cold heat or heat stored in the heat storage tank is consumed, the electric power stored in the power storage device is not used for temperature control. Therefore, sufficient electric power for driving an electric motor for travel of the vehicle can be maintained, for example.

### ADVANTAGEOUS EFFECTS OF INVENTION

According to the present invention, at least the temperature of the air in the vehicle interior, the temperature of the power storage device, and the temperature of the electric equipment electrically connected to the power storage device can be controlled collectively.

### BRIEF DESCRIPTION OF DRAWINGS

Fig. 1 is a schematic structural diagram illustrating an electric vehicle.
Fig. 2 is a (first) diagram illustrating an electric system of the electric vehicle.
Fig. 3 is a (second) diagram illustrating the electric system of the electric vehicle.
Fig. 4 is a diagram illustrating a connector of a charging cable.
Fig. 5 is a diagram illustrating a temperature control system.
Fig. 6 is a (third) diagram illustrating the electric system of the electric vehicle.
Fig. 7 is a (first) diagram illustrating a flow path of a heat medium.
Fig. 8 is a (second) diagram illustrating the flow path of the heat medium.
Fig. 9 is a (third) diagram illustrating the flow path of the heat medium.
Fig. 10 is a (first) diagram illustrating the temperatures of a battery stack, a transaxle, a converter, an inverter, a charger and an electric motor.
Fig. 11 is a (fourth) diagram illustrating the flow path of the heat medium.
Fig. 12 is a (fifth) diagram illustrating the flow path of the heat medium.
Fig. 13 is a (second) diagram illustrating the temperatures of the battery stack, the transaxle, the converter, the inverter, the charger and the electric motor.
Fig. 14 is a (first) flow chart illustrating a process executed by the temperature control system.
Fig. 15 is a (second) flow chart illustrating the process executed by the temperature control system.
Fig. 16 is a (second) flow chart illustrating the process executed by the temperature control system.

### DESCRIPTION OF EMBODIMENTS

The embodiments of the present invention will be hereinafter described with reference to the drawings, in which the same components are designated by the same reference characters. Names and functions thereof are the same, and therefore, description thereof will not be repeated.

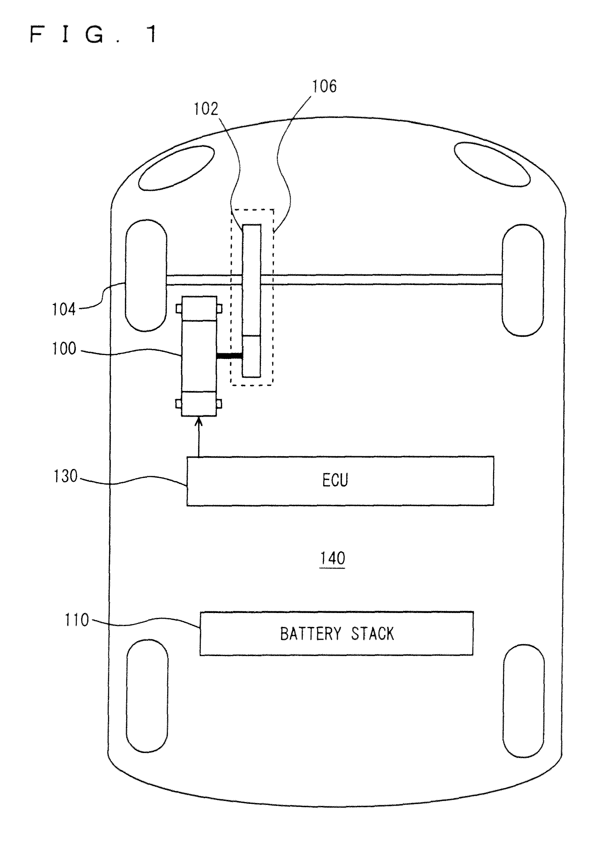

Referring to Fig. 1, an electric vehicle will be described. This electric vehicle is equipped with an electric motor 100, and a battery stack 110. The electric vehicle runs using electric motor 100 as a driving source supplied with electric power from battery stack 110. A hybrid vehicle equipped with an internal combustion engine in addition to electric motor 100 may be employed instead.

Electric motor 100 is controlled by an ECU (Electronic Control Unit) 130. ECU 130 may be divided into a plurality of ECUs.

Electric motor 100 is a three-phase alternating-current rotating electric machine having a U-phase coil, a V-phase coil and a W-phase coil. Electric motor 100 is driven by electric power stored in battery stack 110.

The driving force of electric motor 100 is transmitted to a driving wheel 104 via a reduction gear 102. Electric motor 100 thereby causes the vehicle to run. During regenerative braking of the electric vehicle, electric motor 100 is driven by driving wheel 104 via reduction gear 102 to thereby operate electric motor 100 as a power generator. Accordingly, electric motor 100 operates as a regenerative brake for converting braking energy into electric power. The electric power generated by electric motor 100 is stored in battery stack 110. Reduction gear 102 is contained in a transaxle 106 together with a differential gear (not shown).

Battery stack 110 serves as a battery set having a configuration in which a plurality of battery modules each having a plurality of battery cells integrated with each other are connected in series. Battery stack 110 is charged with electric power supplied from a power supply outside the vehicle, in addition to electric motor 100.

Battery stack 110 is disposed in a trunk located at the back of a vehicle interior 140, for example. It is to be noted that the location where battery stack 110 is disposed is not limited thereto.

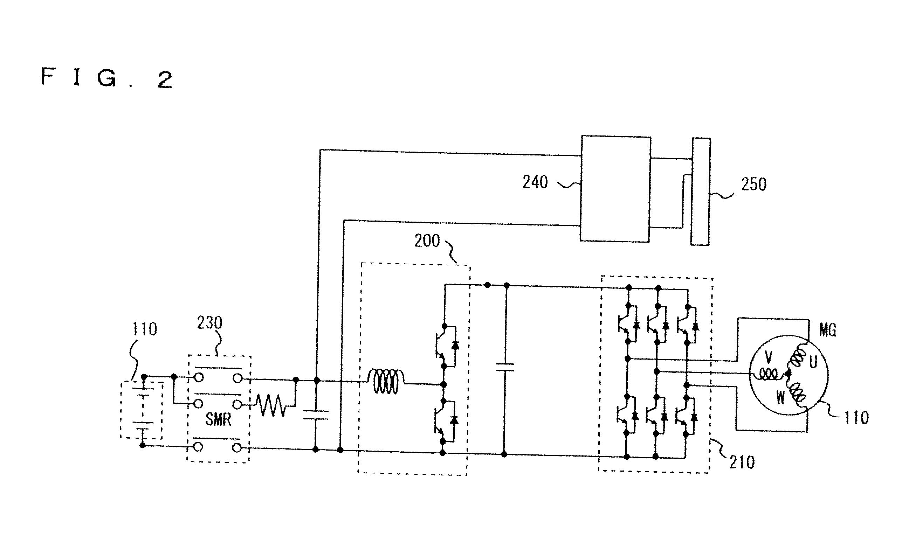

Referring to Fig. 2, the electric system of the electric vehicle will now be described further. The electric vehicle is provided with a converter 200, an inverter 210, a system main relay 230, a charger 240, and an inlet 250.

Converter 200 includes a reactor, two npn-type transistors and two diodes. The reactor has its one end connected to the positive terminal side of each battery, and the other end connected to a connection point between the two npn-type transistors.

The two npn-type transistors are connected in series. The npn-type transistors are controlled by ECU 130. The diodes are respectively connected between the collector and the emitter of the respective npn-type transistors so as to flow current from the emitter to the collector.

The npn-type transistors may be implemented by IGBTs (Insulated Gate Bipolar Transistors), for example. Instead of the npn-type transistors, power-switching elements such as power MOSFETs (Metal Oxide Semiconductor Field-Effect Transistors) can be used.

When electric power discharged from battery stack 110 is supplied to electric motor 100, converter 200 boosts the voltage. In contrast, when electric power generated by electric motor 100 is charged into battery stack 110, converter 200 down-converts the voltage.

Inverter 210 has a U-phase arm, a V-phase arm and a W-phase arm. The U-phase arm, V-phase arm and W-phase arm are connected in parallel. The U-phase arm, V-phase arm and W-phase arm each have two npn-type transistors connected in series. Between the collector and the emitter of each of the npn-type transistors, a diode is connected which flows current from the emitter to the collector. The connection point between the respective npn-type transistors in each arm is connected to an end of each coil of electric motor 100 other than the neutral point.

Inverter 210 converts a DC current supplied from battery stack 110 into an AC current for supply to electric motor 100. Inverter 210 also converts an AC current generated by electric motor 100 into a DC current.

System main relay 230 is provided between battery stack 110 and converter 200. When system main relay 230 is opened, battery stack 110 is disconnected from the electric system. When system main relay 230 is closed, battery stack 110 is connected to the electric system.

The state of system main relay 230 is controlled by ECU 130. For example, when ECU 130 is activated, system main relay 230 is closed. When ECU 130 stops, system main relay 230 is opened.

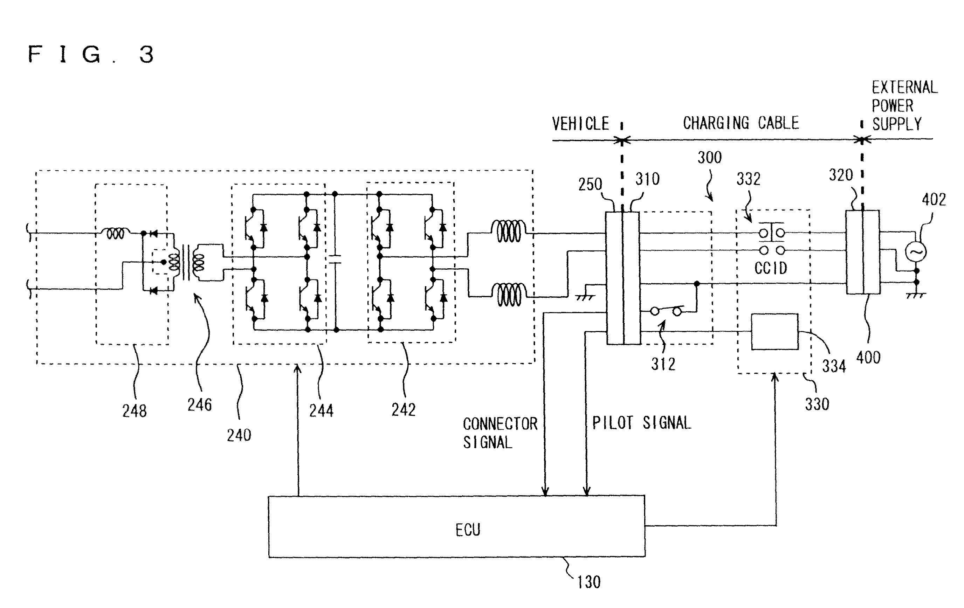

Charger 240 is connected between system main relay 230 and converter 200. As shown in Fig. 3, charger 240 includes an AC/DC conversion circuit 242, a DC/AC conversion circuit 244, an insulation transformer 246, and a rectifier circuit 248.

AC/DC conversion circuit 242 is formed of a single-phase bridge circuit. AC/DC conversion circuit 242 converts AC power into DC power based on a driving signal from ECU 130. AC/DC conversion circuit 242 also serves as a boost chopper circuit that boosts the voltage by using the coils as the reactor.

DC/AC conversion circuit 244 is formed of a single-phase bridge circuit. DC/AC conversion circuit 244 converts DC power into high frequency AC power for output to insulation transformer 246, based on a driving signal from ECU 130.

Insulation transformer 246 includes a core made of a magnetic material, and a primary coil and a secondary coil wound around the coil. The primary coil and secondary coil are electrically insulated, and connected to DC/AC conversion circuit 244 and rectifier circuit 248, respectively. Insulation transformer 246 converts the high frequency AC power received from DC/AC conversion circuit 244 to assume a voltage level in accordance with a turn ratio of the primary coil and the secondary coil for output to rectifier circuit 248. Rectifier circuit 248 rectifies the AC power received from insulation transformer 246 into DC power.

When battery stack 110 is charged from the power supply outside the vehicle, ECU 130 generates a driving signal for driving charger 240 for output to charger 240.

Inlet 250 is provided on a side face of the electric vehicle, for example. A connector 310 of charging cable 300 coupling the electric vehicle and an external power supply 402 is connected to inlet 250.

Charging cable 300 coupling the electric vehicle and external power supply 402 includes connector 310, a plug 320, and a CCID (Charging Circuit Interrupt Device) 330.

Connector 310 of charging cable 300 is connected to inlet 250 provided on the electric vehicle. Connector 310 is provided with a switch 312. When switch 312 is closed with connector 310 of charging cable 300 being connected to inlet 250 provided on the electric vehicle, ECU 130 receives a connector signal CNCT indicating that connector 310 of charging cable 300 is being connected to inlet 250 provided on the electric vehicle.

Switch 312 opens and closes in coordination with an anchor fitting anchoring connector 310 of charging cable 300 to inlet 250 of the electric vehicle. The anchor fitting swings by a user pressing a button provided on connector 310.

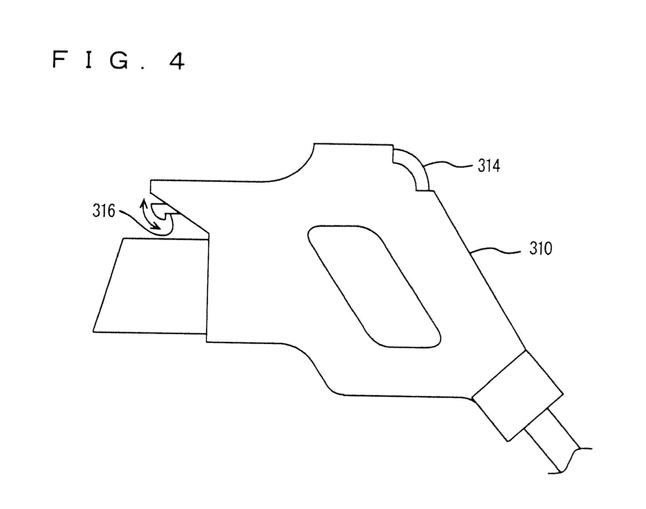

For example, when the user moves the finger off a button 314 of connector 310 shown in Fig. 4 with connector 310 of charging cable 300 being connected to inlet 250 provided on the electric vehicle, an anchor fitting 316 engages with inlet 250 provided on the electric vehicle, and switch 312 is closed. When the user presses button 314, anchor fitting 316 is disengaged from inlet 250, and switch 312 is opened. It is to be noted that the method of opening and closing switch 312 is not limited thereto.

Referring back to Fig. 3, plug 320 of charging cable 300 is connected to an outlet 400 provided at a house. AC power is supplied from power supply 402 outside the electric vehicle to outlet 400.

CCID 330 has a relay 332 and a control pilot circuit 334. When relay 332 is opened, the path is interrupted through which the electric power is supplied from power supply 402 outside the electric vehicle to the electric vehicle. When relay 332 is closed, the electric power can be supplied from power supply 402 outside the electric vehicle to the electric vehicle. ECU 130 controls the state of relay 332 with connector 310 of charging cable 300 being connected to inlet 250 of the electric vehicle.

Control pilot circuit 334 transmits a pilot signal (square wave signal) CPLT to a control pilot line with plug 320 of charging cable 300 being connected to outlet 400, that is, external power supply 402, and with connector 310 being connected to inlet 250 provided on the electric vehicle. The pilot signal is oscillated by an oscillator provided in control pilot circuit 334.

When plug 320 of charging cable 300 is connected to outlet 400, control pilot circuit 334 may output a constant pilot signal CPLT even if connector 310 is disconnected from inlet 250 provided on the electric vehicle. However, ECU 130 cannot detect pilot signal CPLT output with connector 310 being disconnected from inlet 250 provided on the electric vehicle.

When plug 320 of charging cable 300 is connected to outlet 400 and connector 310 is connected to inlet 250 of the electric vehicle, control pilot circuit 334 oscillates pilot signal CPLT of a predetermined pulse width (duty cycle).

The electric vehicle is notified of a current capacity that can be supplied, in accordance with the pulse width of pilot signal CPLT. For example, the electric vehicle is notified of a current capacity of charging cable 300. The pulse width of pilot signal CPLT is constant independently of the voltage and the current of external power supply 402.

If a different type of a charging cable is used, the pulse width of pilot signal CPLT may vary. In other words, the pulse width of pilot signal CPLT may be set for each type of the charging cables.

In the present embodiment, the electric power supplied from external power supply 402 is charged into battery stack 110 with the electric vehicle and external power supply 402 being coupled to each other by charging cable 300. During charging of f battery stack 110, system main relay 230 and relay 332 in CCID 330 are closed.

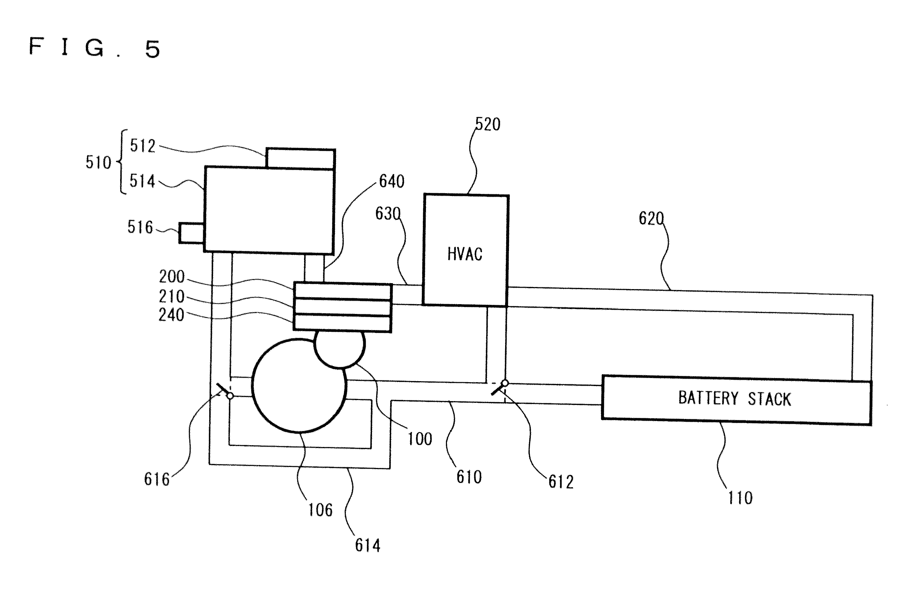

Referring to Fig. 5, a temperature control system mounted on the electric vehicle will be described.

The temperature control system includes a first air conditioner 510, a second air conditioner 520, a first supply member 610, a second supply member 620, a third supply member 630 and a fourth supply member 640.

First air conditioner 510 changes the temperature of a heat medium (coolant). An LLC (Long Life Coolant) is used as the heat medium, for example. It is to be noted that the heat medium is not limited to the LLC. In the present embodiment, first air conditioner 510 includes a Peltier device 512, and a heat storage tank 514. The temperature of the heat medium is sensed by a temperature sensor 516, and a signal indicating the detected temperature is input to ECU 130.

Peltier device 512 operates with electric power, to cool or heat the heat medium. Peltier device 512 receives electric power supplied from power supply 402 outside the vehicle, or electric power stored in battery stack 110. Heat storage tank 514 stores the heat medium cooled or heated by Peltier device 512. Since Peltier device 512 and heat storage tank 514 may be implemented by well-known general components, further detailed description thereof will not be repeated. Instead of Peltier device 512 and heat storage tank 514, a heat pump may be used as first air conditioner 510.

Second air conditioner 520 adjusts the temperature of the air in vehicle interior 140 using the heat medium. Namely, second air conditioner 520 exchanges heat between the heat medium and the air. The heat medium is subjected to heat exchange with the air in vehicle interior 140 or the air taken in from outside the vehicle, and transferred to vehicle interior 140. Second air conditioner 520 corresponds to a device commonly referred to as an HVAC (Heating, Ventilating and Air-Conditioning system).

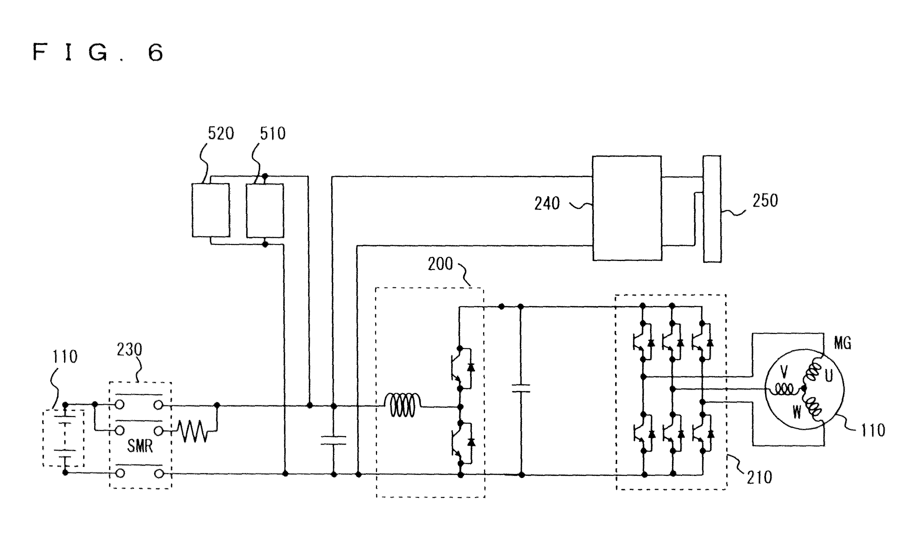

As shown in Fig. 6, first air conditioner 510 and second air conditioner 520 are electrically connected to battery stack 110 and charger 240. Accordingly, first air conditioner 510 and second air conditioner 520 can operate with electric power stored in battery stack 110, or electric power supplied from charger 240.

In the present embodiment, during travel of the vehicle, first air conditioner 510 and second air conditioner 520 operate with the electric power stored in battery stack 110. While electric power is supplied from power supply 402 outside the vehicle to the vehicle, first air conditioner 510 and second air conditioner 520 operate with the electric power supplied from power supply 402 outside the vehicle.

Referring back to Fig. 5, first supply member 610 supplies the heat medium from first air conditioner 510 to at least one of battery stack 110 and second air conditioner 520. More specifically, the heat medium is supplied from heat storage tank 514 to at least one of battery stack 110 and second air conditioner 520.

First supply member 610 supplies the heat medium, through transaxle 106, from first air conditioner 510 (heat storage tank 514) to at least one of battery stack 110 and second air conditioner 520.

A flow path of the heat medium is adjusted by a valve 612, for example. When valve 612 swings upward in Fig. 5, the heat medium is supplied from first air conditioner 510 to battery stack 110. In contrast, when valve 612 swings downward in Fig. 5, the heat medium is supplied from first air conditioner 510 to second air conditioner 520. When valve 612 is in an intermediate position, the heat medium is supplied from first air conditioner 510 to both of battery stack 110 and second air conditioner 520. Valve 612 for switching the flow path of the heat medium is one example, and is not restrictive. Any other members may be used for switching the flow path of the heat medium.

First supply member 610 further includes a bypass path 614 bypassing transaxle 106. When the heat medium passes through bypass path 614, the heat medium is supplied, while bypassing transaxle 106, from first air conditioner 510 to at least one of battery stack 110 and second air conditioner 520.

The flow path of the heat medium is adjusted by a valve 616, for example. When valve 616 swings upward in Fig. 5, the heat medium is supplied, while bypassing transaxle 106, from first air conditioner 510 to at least one of battery stack 110 and second air conditioner 520. In contrast, when valve 612 swings downward in Fig. 5, the heat medium is supplied, through transaxle 106, from first air conditioner 510 to at least one of battery stack 110 and second air conditioner 520. Valve 616 for switching the flow path of the heat medium is one example, and is not restrictive. Any other members may be used for switching the flow path of the heat medium.

Second supply member 620 supplies the heat medium from battery stack 110 to second air conditioner 520. Third supply member 630 supplies the heat medium from second air conditioner 520 to electric equipment electrically connected to battery stack 110, such as electric motor 100, converter 200, inverter 210 and charger 240. Fourth supply member 640 supplies the heat medium from the electric equipment to first air conditioner 510 (heat storage tank 514).

The function of the temperature control system will be described below.

### Cooling Function

It is assumed that the temperature of the air in vehicle interior 140 is relatively high in summer and the like. In this case, while electric power is supplied from power supply 402 outside the vehicle to the vehicle, namely, while inlet 250 and outlet 400 are connected to each other by charging cable 300, first air conditioner 510 operates with the electric power supplied from power supply 402 outside the vehicle, to cool the heat medium.

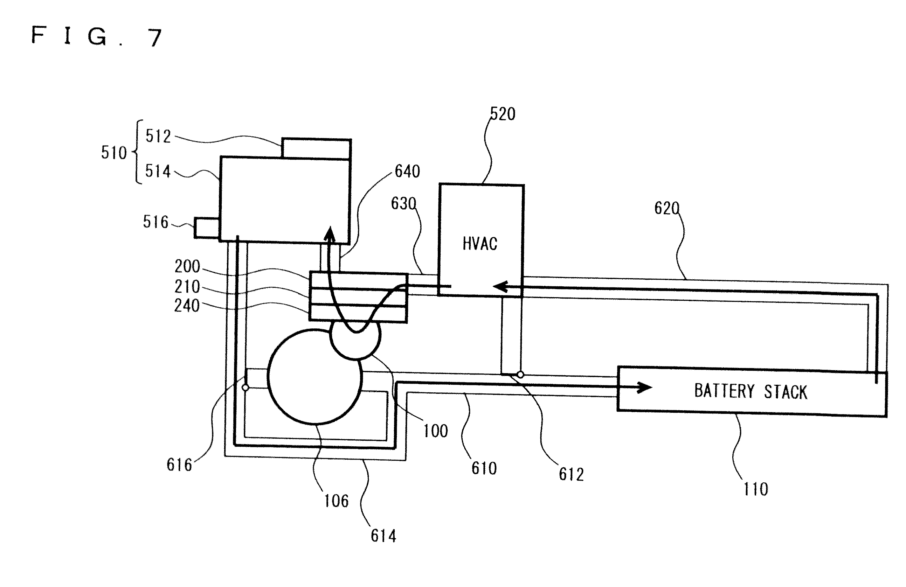

While electric power is supplied from power supply 402 outside the vehicle to the vehicle, first supply member 610 supplies the heat medium from first air conditioner 510 to battery stack 110, as shown in Fig. 7. More specifically, the heat medium is supplied, while bypassing transaxle 106, from first air conditioner 510 to battery stack 110.

In this manner, during charging of battery stack 110, battery stack 110 is cooled. In addition, cold heat is stored in battery stack 110. In contrast, transaxle 106 is not cooled. Thus, the temperature of lubricant of transaxle 106 is maintained at a high level. Thus, the viscosity of the lubricant is maintained at a low level.

The heat medium supplied to battery stack 110 flows to second air conditioner 520. Second air conditioner 520 exchanges heat between the heat medium supplied from battery stack 110 and the air, and transfers the cooled air into vehicle interior 140. The air in vehicle interior 140 is cooled in this manner. While electric power is supplied from power supply 402 outside the vehicle to the vehicle, second air conditioner 520 automatically starts operation in accordance with a time set with a timer by the user, for example. The user may alternatively control second air conditioner 520 by operating a remote controller.

The heat medium used for cooling in second air conditioner 520 is supplied from second air conditioner 520 to the electric equipment such as electric motor 100, converter 200, inverter 210 and charger 240. The electric equipment is cooled in this manner. The heat medium is returned from the electric equipment to first air conditioner 510 (heat storage tank 514). The heat medium returned to first air conditioner 510 is cooled again by Peltier device 512.

The function of the temperature control system during travel of the vehicle will be described below. Immediately after the vehicle is started, power feeding to Peltier device 512 of first air conditioner 510 is stopped. That is, cooling of the heat medium by Peltier device 512 is stopped.

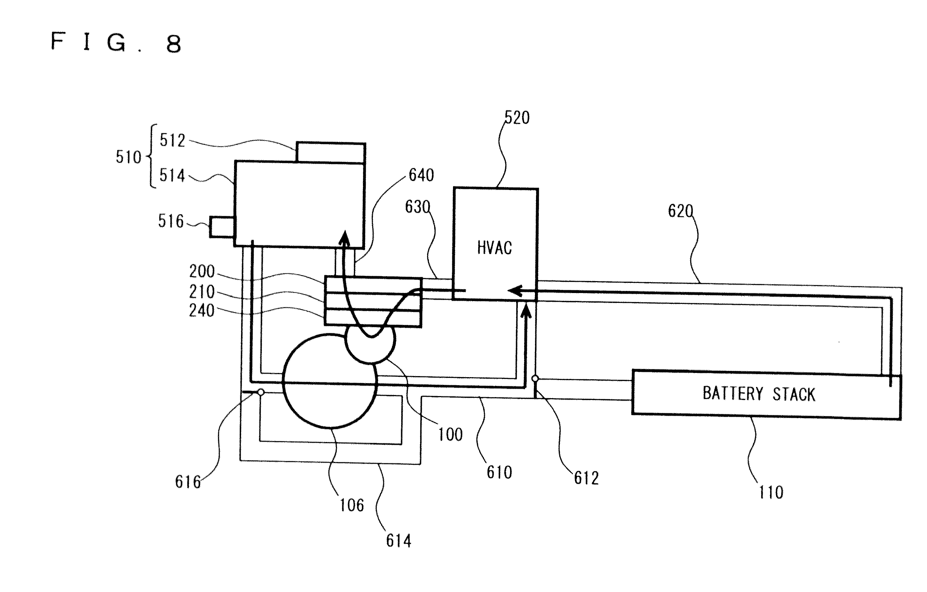

Referring to Fig. 8, during travel of the vehicle, first supply member 610 supplies the heat medium from first air conditioner 510 (heat storage tank 514) to second air conditioner 520. More specifically, the heat medium is supplied, through transaxle 106, from first air conditioner 510 to second air conditioner 520.

In this manner, during travel of the vehicle, transaxle 106 is cooled. Second air conditioner 520 cools the air in vehicle interior 140 by exchanging heat between the heat medium supplied from first air conditioner 510 and the air.

The heat medium is further supplied from battery stack 110 to second air conditioner 520. That is, the cold heat stored in battery pack 110 is partially supplied to second air conditioner 520. During travel of the vehicle, second air conditioner 520 cools the air in vehicle interior 140 using the heat medium supplied from battery stack 110. That is, during travel of the vehicle, second air conditioner 520 cools the air in vehicle interior 140 using the heat medium supplied from battery stack 110, in addition to the heat medium supplied from first air conditioner 510. In this manner, battery stack 110 can be utilized as a heat storage device. In addition, temperature increase of the heat medium stored in heat storage tank 514 can be suppressed.

The heat medium used for cooling in second air conditioner 520 is supplied from second air conditioner 520 to the electric equipment such as electric motor 100, converter 200, inverter 210 and charger 240. The electric equipment is cooled in this manner. The heat medium is returned from the electric equipment to first air conditioner 510 (heat storage tank 514).

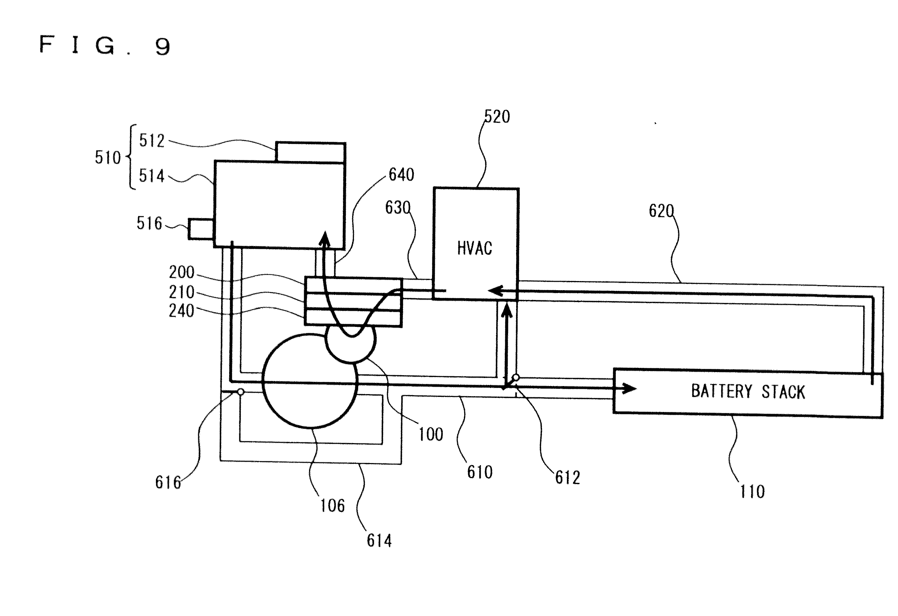

After a temperature TM of the heat medium in heat storage tank 514 changed (increased) to a predetermined temperature TM1, Peltier device 512 of first air conditioner 510 operates with the electric power stored in battery stack 110, to cool the heat medium. Cooling is continued in this manner. As shown in Fig. 9, the heat medium cooled by first air conditioner 510 is supplied to second air conditioner 520, and also to battery stack 110 if necessary.

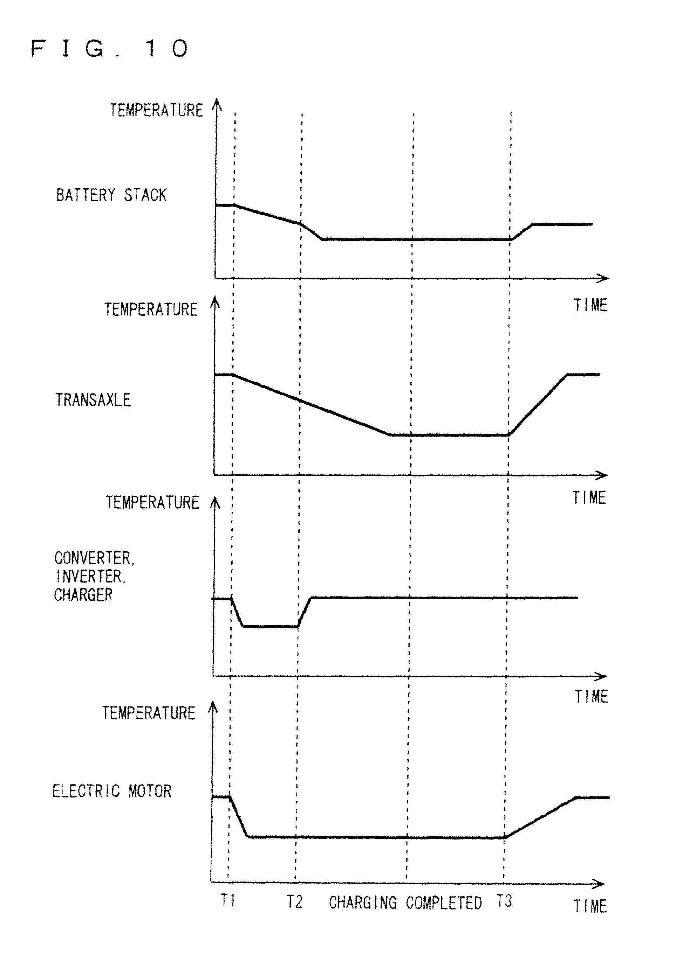

Fig. 10 illustrates the temperatures of battery stack 110, transaxle 106, converter 200, inverter 210, charger 240 and electric motor 100.

After inlet 250 and outlet 400 are connected to each other by charging cable 300 at time T1, charging of battery stack 110 is started at predetermined time T2 with the timer, for example.

Then, first air conditioner 510 operates with the electric power supplied from power supply 402 outside the vehicle, to cool the heat medium. Consequently, battery stack 110, converter 200, inverter 210 and charger 240 are cooled, to thereby reduce the temperature of battery stack 110. An amount of increase in temperature of each of converter 200, inverter 210 and charger 240 is limited.

After the vehicle is started at time T3, second air conditioner 520 cools the air in vehicle interior 140 using the cold heat stored in battery stack 110. As a result, the temperature of battery stack 110 increases to some degree.

In addition, the temperatures of transaxle 106 and electric motor 100 increase to some degree. Owing to the cooled heat medium, however, an amount of increase in each of these temperatures is limited.

### Heating Function

It is assumed that the temperature of the air in vehicle interior 140 is relatively low in winter and the like. In this case, while electric power is supplied from power supply 402 outside the vehicle to the vehicle, first air conditioner 510 operates with the electric power supplied from power supply 402 outside the vehicle, to heat the heat medium.

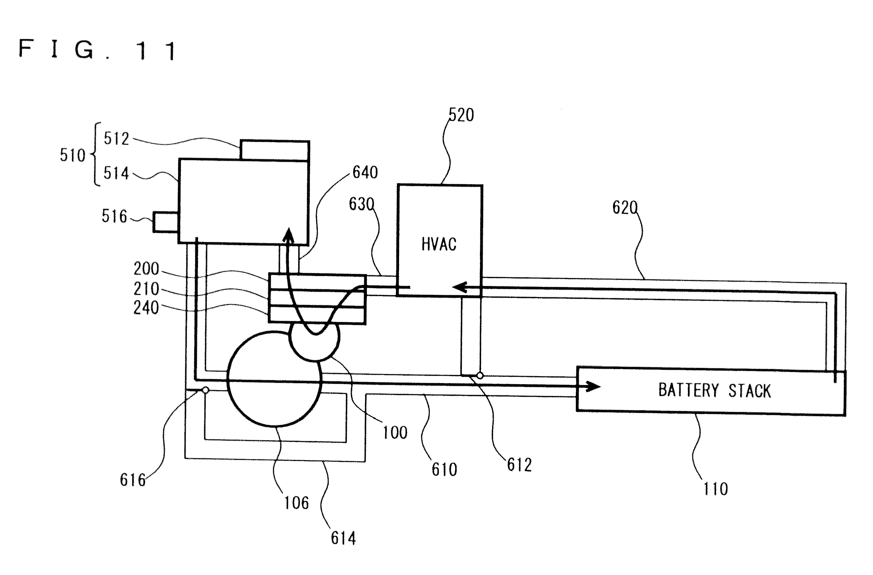

While electric power is supplied from power supply 402 outside the vehicle to the vehicle, first supply member 610 supplies the heat medium from first air conditioner 510 to battery stack 110, as shown in Fig. 11. More specifically, the heat is supplied, through transaxle 106, from first air conditioner 510 to battery stack 110.

Battery stack 110 is heated in this manner. Thus, heat is stored in battery stack 110. In addition, transaxle 106 is warmed up. Thus, the temperature of the lubricant of transaxle 106 is increased. Thus, the viscosity of the lubricant is lowered.

The heat medium supplied to battery stack 110 flows to second air conditioner 520. Second air conditioner 520 exchanges heat between the heat medium supplied from battery stack 110 and the air, and transfers the heated air into vehicle interior 140. The air in vehicle interior 140 is heated in this manner. Second air conditioner 520 automatically starts operation in accordance with a time set with the timer by the user, for example. The user may alternatively control second air conditioner 520 by operating the remote controller.

The heat medium used for heating in second air conditioner 520 is supplied from second air conditioner 520 to the electric equipment such as electric motor 100, converter 200, inverter 210 and charger 240. In this manner, the heat medium that has dissipated heat in second air conditioner 520 is heated by the heat generated by the electric equipment. Thermal efficiency is thus improved. The heat medium is returned from the electric equipment to first air conditioner 510 (heat storage tank 514). The heat medium returned to first air conditioner 510 is heated again by Peltier device 512.

The function of the temperature control system during travel of the vehicle will be described below. Immediately after the vehicle is started, power feeding to Peltier device 512 of first air conditioner 510 is stopped. That is, heating of the heat medium by Peltier device 512 is stopped.

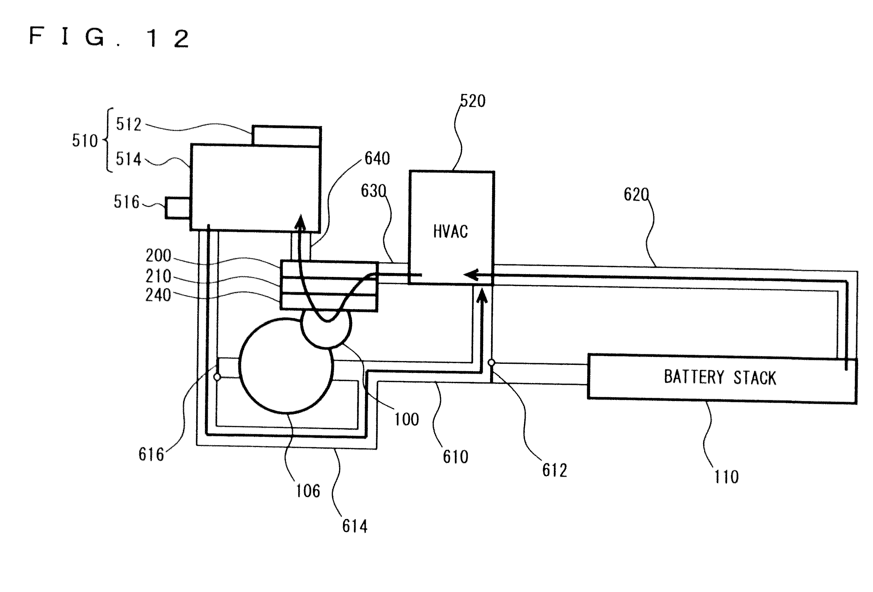

Referring to Fig. 12, during travel of the vehicle, first supply member 610 supplies the heat medium from first air conditioner 510 (heat storage tank 514) to second air conditioner 520. More specifically, the heat medium is supplied, while bypassing transaxle 106, from first air conditioner 510 to second air conditioner 520.

In this manner, transaxle 106 can be prevented from being heated unnecessarily in a situation where transaxle 106 may generate heat. Second air conditioner 520 heats the air in vehicle interior 140 by exchanging heat between the heat medium supplied from first air conditioner 510 and the air.

The heat medium is further supplied from battery stack 110 to second air conditioner 520. That is, the heat stored in battery pack 110 is partially supplied to second air conditioner 520. During travel of the vehicle, second air conditioner 520 heats the air in vehicle interior 140 using the heat medium supplied from battery stack 110. That is, during travel of the vehicle, second air conditioner 520 heats the air in vehicle interior 140 using the heat medium supplied from battery stack 110, in addition to the heat medium supplied from first air conditioner 510. In this manner, battery stack 110 can be utilized as a heat storage device. In addition, temperature decrease of the heat medium stored in heat storage tank 514 can be suppressed.

The heat medium used for heating in second air conditioner 520 is supplied from second air conditioner 520 to the electric equipment such as electric motor 100, converter 200, inverter 210 and charger 240. In this manner, the heat medium that has dissipated heat in second air conditioner 520 is heated by the heat generated by the electric equipment. The heat medium is returned from the electric equipment to first air conditioner 510 (heat storage tank 514). Thus, temperature decrease of the heat medium in heat storage tank 514 is suppressed.

After temperature TM of the heat medium in heat storage tank 514 changed (decreased) to a predetermined temperature TM2, Peltier device 512 of first air conditioner 510 operates with the electric power stored in battery stack 110, to heat the heat medium. Heating is continued in this manner.

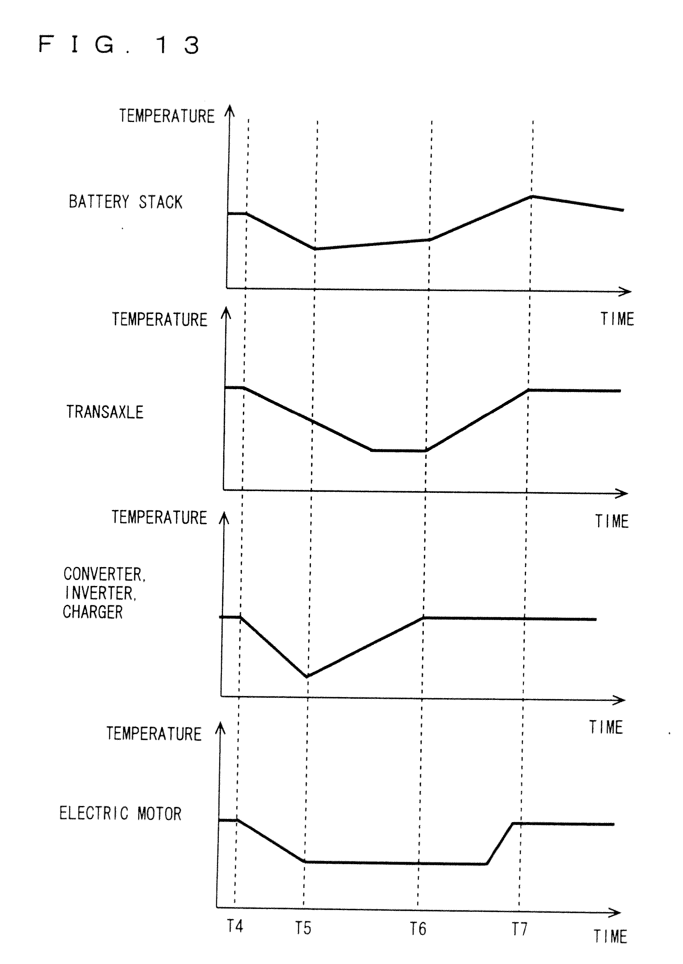

Fig. 13 illustrates the temperatures of battery stack 110, transaxle 106, converter 200, inverter 210, charger 240 and electric motor 100.

After inlet 250 and outlet 400 are connected to each other by charging cable 300 at time T4, charging of battery stack 110 is started at preset time T5 with the timer, for example.

After charging of battery stack 110 is completed at time T6, first air conditioner 510 operates with the electric power supplied from power supply 402 outside the vehicle, to heat the heat medium. Consequently, transaxle 106 and battery stack 110 are heated, to thereby increase the temperatures of transaxle 106 and battery stack 110.

Electric motor 100 is provided in proximity to transaxle 106. Accordingly, as the temperature of transaxle 106 increases, the temperature of electric motor 100 increases.

After the vehicle is started at time T7, second air conditioner 520 heats the air in vehicle interior 140 using the heat stored in battery stack 110. As a result, the temperature of battery stack 110 decreases.

Electric motor 100, converter 200, inverter 210 and charger 240 are cooled by heat exchange with the heat medium that has dissipated heat in second air conditioner 520. Thus, their temperatures are limited.

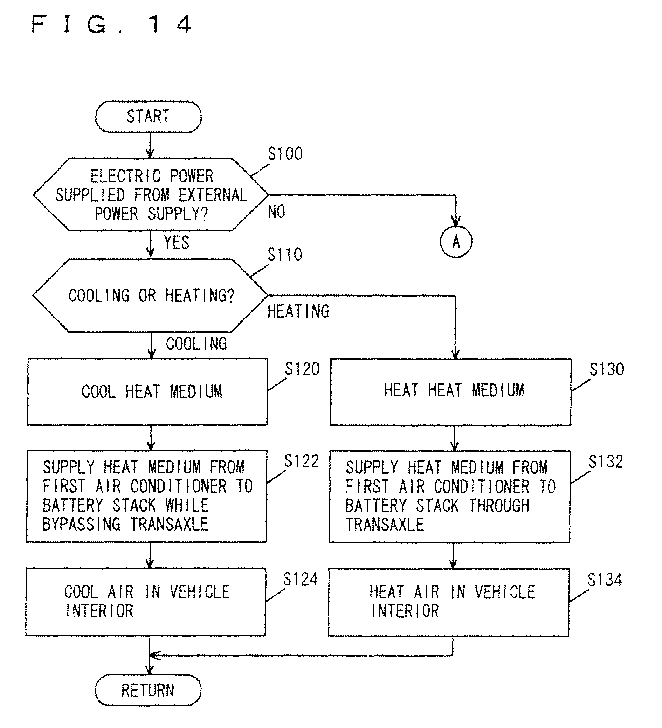

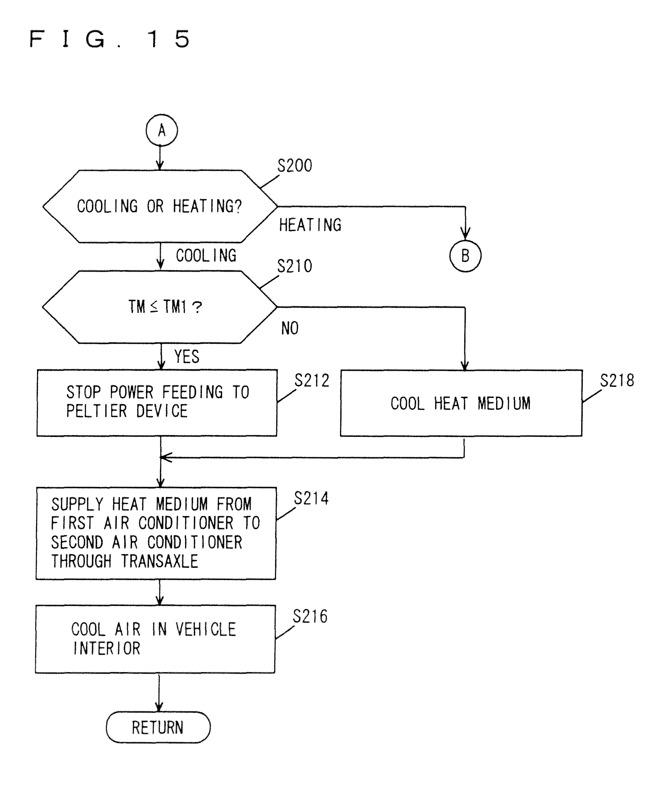

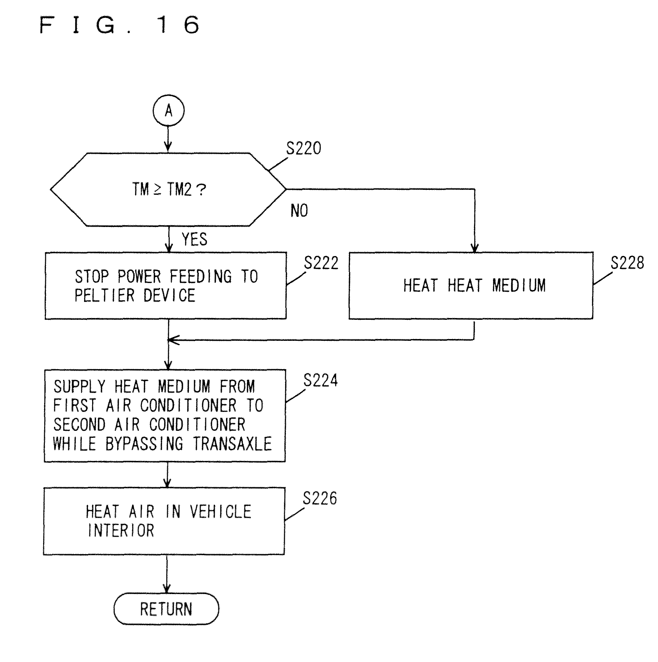

Referring to Figs. 14, 15 and 16, the process executed by the temperature control system according to the present embodiment will be described.

In step (hereinafter abbreviated as S) 100, it is determined whether or not electric power is being supplied from power supply 402 outside the vehicle to the vehicle. For example, if ECU 130 receives the pilot signal, it is determined that electric power is being supplied from power supply 402 outside the vehicle to the vehicle.

If electric power is being supplied from power supply 402 outside the vehicle to the vehicle (YES in S 100), the process proceeds to S 110. If not (NO in S 100), the process proceeds to S200.

In S 110, it is determined whether the heat medium is to be cooled or heated. For example, if the temperature outside the vehicle is equal to or higher than a predetermined threshold value, it is determined that the heat medium is to be cooled. In contrast, if the temperature outside the vehicle is lower than the predetermined threshold value, it is determined that the heat medium is to be heated.

If the heat medium is to be cooled, the process proceeds to S120. If the heat medium is to be heated, the process proceeds to S 130.

In S120, first air conditioner 510 operates with the electric power supplied from power supply 402 outside the vehicle, to cool the heat medium by Peltier device 512.

In S 122, first supply member 610 supplies the heat medium from first air conditioner 510 to battery stack 110. More specifically, the heat medium is supplied, while bypassing transaxle 106, from first air conditioner 510 to battery stack 110.

In S124, second air conditioner 520 operates with the electric power supplied from power supply 402 outside the vehicle, to cool the air in vehicle interior 140. Second air conditioner 520 automatically starts operation at a time arbitrarily set by the user, for example.

In S 130, first air conditioner 510 operates with the electric power supplied from power supply 402 outside the vehicle, to heat the heat medium by Peltier device 512.

In S 132, first supply member 610 supplies the heat medium from first air conditioner 510 to battery stack 110. More specifically, the heat medium is supplied, through transaxle 106, from first air conditioner 510 to battery stack 110.

In S 134, second air conditioner 520 operates with the electric power supplied from power supply 402 outside the vehicle, to heat the air in vehicle interior 140. Second air conditioner 520 automatically starts operation at a time arbitrarily set by the user, for example.

In S200, it is determined whether the heat medium was cooled or heated when electric power was supplied from power supply 402 outside the vehicle to the vehicle the last time. If the heat medium was cooled, the process proceeds to S210. If the heat medium was heated, the process proceeds to S220.

In S210, it is determined whether or not temperature TM of the heat medium is equal to or lower than predetermined temperature TM1. If temperature TM of the heat medium is equal to or lower than predetermined temperature TM1 (YES in S210), the process proceeds to S212. If temperature TM of the heat medium is higher than predetermined temperature TM1 (NO in S210), the process proceeds to S218.

In S212, power feeding to Peltier device 512 is stopped. In S214, first supply member 610 supplies the heat medium from first air conditioner 510 (heat storage tank 514) to second air conditioner 520. More specifically, the heat medium is supplied, through transaxle 106, from first air conditioner 510 to second air conditioner 520.

In S216, second air conditioner 520 operates with the electric power stored in battery stack 110, to cool the air in vehicle interior 140. Second air conditioner 520 operates based on operation by a passenger in vehicle interior 140, for example.

In S218, first air conditioner 510 operates with the electric power stored in battery stack 110, to cool the heat medium by Peltier device 512.

In S220, it is determined whether or not temperature TM of the heat medium is equal to or higher than predetermined temperature TM2. If temperature TM of the heat medium is equal to or higher than predetermined temperature TM2 (YES in S220), the process proceeds to S222. If temperature TM of the heat medium is lower than predetermined temperature TM2 (NO in S220), the process proceeds to S228.

In S222, power feeding to Peltier device 512 is stopped. In S224, first supply member 610 supplies the heat medium from first air conditioner 510 (heat storage tank 514) to second air conditioner 520. More specifically, the heat medium is supplied, while bypassing transaxle 106, from first air conditioner 510 to second air conditioner 520.

In S226, second air conditioner 520 operates with the electric power stored in battery stack 110, to heat the air in vehicle interior 140. Second air conditioner 520 operates based on operation by the passenger in vehicle interior 140, for example.

In S228, first air conditioner 510 operates with the electric power stored in battery stack 110, to heat the heat medium by Peltier device 512.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

### REFERENCE SIGNS LIST

100 electric motor; 102 reduction gear; 106 transaxle; 110 battery stack; 130 ECU; 140 vehicle interior; 200 converter; 210 inverter; 240 charger; 250 inlet; 300 charging cable; 400 outlet; 402 power supply; 510 first air conditioner; 512 Peltier device; 514 heat storage tank; 516 temperature sensor; 520 second air conditioner; 610 first supply member; 612 valve; 614 bypass path; 616 valve; 620 second supply member; 630 third supply member; 640 fourth supply member

## Claims

1. A temperature control system for a vehicle equipped with a power storage device (110) that stores electric power, and electric equipment (100, 200, 210, 240) electrically connected to said power storage device (110), comprising:
a first air conditioner (510) that changes a temperature of a medium;
a second air conditioner (520) that adjusts a temperature of air in a vehicle interior (140) using said medium;
a first supply member (610) that supplies said medium from said first air conditioner (510) to at least one of said power storage device (110) and said second air conditioner (520);
a second supply member (620) that supplies said medium from said power storage device (110) to said second air conditioner (520);
a third supply member (630) that supplies said medium from said second air conditioner (520) to said electric equipment (100, 200, 210, 240); and
a fourth supply member (640) that supplies said medium from said electric equipment (100, 200, 210, 240) to said first air conditioner (510).

2. The temperature control system for a vehicle according to claim 1, wherein
while electric power is supplied from a power supply (402) outside said vehicle to said vehicle, said power storage device (110) is charged with the electric power supplied from said power supply (402) outside said vehicle,
while the electric power is supplied from said power supply (402) outside said vehicle to said vehicle, said first air conditioner (510) operates with the electric power supplied from said power supply (402) outside said vehicle, to cool said medium,
while the electric power is supplied from said power supply (402) outside said vehicle to said vehicle, said first supply member (610) supplies said medium from said first air conditioner (510) to said power storage device (110), and
during travel of said vehicle, said second air conditioner (520) cools the air in said vehicle interior (140) using the medium supplied from said power storage device (110).

3. The temperature control system for a vehicle according to claim 1, wherein
while electric power is supplied from a power supply (402) outside said vehicle to said vehicle, said power storage device (110) is charged with the electric power supplied from said power supply (402) outside said vehicle,
while the electric power is supplied from said power supply (402) outside said vehicle to said vehicle, said first air conditioner (510) operates with the electric power supplied from said power supply (402) outside said vehicle, to heat said medium,
while the electric power is supplied from said power supply (402) outside said vehicle to said vehicle, said first supply member (610) supplies said medium from said first air conditioner (510) to said power storage device (110), and
during travel of said vehicle, said second air conditioner (520) heats the air in said vehicle interior (140) using the medium supplied from said power storage device (110).

4. The temperature control system for a vehicle according to claim 1, wherein
while electric power is supplied from a power supply (402) outside said vehicle to said vehicle, said power storage device (110) is charged with the electric power supplied from said power supply (402) outside said vehicle,
while the electric power is supplied from said power supply (402) outside said vehicle to said vehicle, said first air conditioner (510) operates with the electric power supplied from said power supply (402) outside said vehicle, to cool said medium, and
while the electric power is supplied from said power supply (402) outside said vehicle to said vehicle, said first supply member (610) supplies said medium from said first air conditioner (510) to said power storage device (110), and during travel of said vehicle, said first supply member (610) supplies said medium from said first air conditioner (510) to said second air conditioner (520).

5. The temperature control system for a vehicle according to claim 4, wherein
said vehicle is equipped with a transaxle, and
while the electric power is supplied from said power supply (402) outside said vehicle to said vehicle, said first supply member (610) supplies said medium, while bypassing said transaxle, from said first air conditioner (510) to said power storage device (110), and during travel of said vehicle, said first supply member (610) supplies said medium, through said transaxle, from said first air conditioner (510) to said second air conditioner (520).

6. The temperature Control system for a vehicle according to claim 1, wherein
while electric power is supplied from a power supply (402) outside said vehicle to said vehicle, said power storage device (110) is charged with the electric power supplied from said power supply (402) outside said vehicle,
while the electric power is supplied from said power supply (402) outside said vehicle to said vehicle, said first air conditioner (510) operates with the electric power supplied from said power supply (402) outside said vehicle, to heat said medium, and
while the electric power is supplied from said power supply (402) outside said vehicle to said vehicle, said first supply member (610) supplies said medium from said first air conditioner (510) to said power storage device (110), and during travel of said vehicle, said first supply member (610) supplies said medium from said first air conditioner (510) to said second air conditioner (520).

7. The temperature control system for a vehicle according to claim 6, wherein
said vehicle is equipped with a transaxle, and
while the electric power is supplied from said power supply (402) outside said vehicle to said vehicle, said first supply member (610) supplies said medium, through said transaxle, from said first air conditioner (510) to said power storage device (110), and during travel of said vehicle, said first supply member (610) supplies said medium, while bypassing said transaxle, from said first air conditioner (510) to said second air conditioner (520).

8. The temperature control system for a vehicle according to claim 1, wherein
said first air conditioner (510) includes a Peltier device, and a heat storage tank for storing said medium.

9. The temperature control system for a vehicle according to claim 8, wherein
during travel of said vehicle, said Peltier device operates with electric power stored in said power storage device (110) after a temperature of the medium in said heat storage tank changed to a predetermined temperature.
